# EUROPEAN PATENT SPECIFICATION

(11) **EP 3 588 010 B1**
(45) Date of publication and mention of the grant of the patent: **15.12.2021**
(21) Application number: 18180969.0
(22) Date of filing: 29.06.2018
(51) Int. Cl.: G01C 25/00, G08G 1/16, G06T 7/80, B60S 3/04

(54) **METHOD FOR VALIDATING CALIBRATION DATA OF AT LEAST ONE SENSOR UNIT OF A VEHICLE AND CORRESPONDING VEHICLE SERVICING DEVICE AND SERVICING SYSTEM**
VERFAHREN ZUR VALIDIERUNG VON KALIBRATIONSDATEN VON MINDESTENS EINER SENSOREINHEIT EINES FAHRZEUGS UND ZUGEHÖRIGE FAHRZEUGWARTUNGSVORRICHTUNG UND -WARTUNGSSYSTEM
PROCÉDÉ POUR VALIDER DES DONNÉES D'ÉTALONNAGE D'AU MOINS UNE UNITÉ DE DÉTECTION D'UN VÉHICULE, DISPOSITIF D'ENTRETIEN DE VÉHICULE CORRESPONDANT ET SYSTÈME D'ENTRETIEN

(43) Date of publication of application: 01.01.2020
(73) Proprietor: Argo AI GmbH, 80805 München (DE)
(72) Inventor: FRIEDMANN, Felix, 85386 Eching (DE); WURM, Karlheinz, 83352 Altenmarkt (DE)
(74) Representative: Hofstetter, Schurack & Partner

(56) References cited:
- EP-A1- 2 727 759
- US-A1- 2005 229 808
- US-A1- 2011 285 856
- US-A1- 2017 322 560

## Description

The invention is concerned with a method for calibrating at least one sensor unit of a vehicle. The invention also provides a corresponding system.

It is known from the prior art that a vehicle may comprise at least one sensor unit for surveilling or observing its surroundings. Such a sensor unit may be used for detecting an object in the surroundings, e.g. another vehicle or a pedestrian or a cycle or a static object, like a lamp post. A type of vehicle that heavily relies on at least one sensor unit is a self-driving vehicle that is not supervised by a human driver while conducting the vehicle.

By means of the at least one sensor unit an electronic control unit of such a vehicle may determine the relative position of objects with regard to the vehicle position itself. The electronic control unit may then update an electronic map in which the relative positions of the objects are stored. On the basis of such a digital map the current driving situation may be interpreted and/or a trajectory for conducting the vehicle may be planed.

In order to determine the relative position of an object with regard to the vehicle position, the position and the spatial orientation of each sensor unit in relation to the main body of the vehicle must be known. This can be determined in a calibration procedure. Such a calibration procedure is normally, i.e. in the prior art, performed during the production of the vehicle, and later on, while the vehicle is serviced in a workshop. For such a calibration procedure the vehicle needs to be positioned in a known relative position with regard to a marker element. Such a marker element is designed to be detected by the sensor unit that needs to be calibrated. From the sensor data of the sensor unit, the relative position of the marker element is determined by the electronic control unit that receives the sensor data. This relative position is compared to the known, true relative position of the marker element. This yields calibration data that describe or provide a mapping indicating how the relative position data determined from sensor data needs to be transformed in order to obtain the true relative position.

One problem arises during the use of a vehicle, when a sensor unit may be damaged or may be moved with regard to the main body of the vehicle such that the calibration data are not valid anymore. For example, a sensor unit might be hit during an accident such that its spatial orientation is changed. Another problem may arise, when the sensor unit is covered such that it may not provide correct sensor data. For example, dust or dirt might cover the sensor unit. If a self-driving vehicle relies on such a sensor unit, its ability to surveille its surroundings is reduced. This might lead to false maneuvers and even to an accident.

It is therefore important to observe the current state of at least one sensor unit of a vehicle with regard to the validity of its calibration data.

From DE 10 2012 213 754 A1 it is known that a gyroscopic sensor unit and a sensor unit for determining the slope of a vehicle (as can be determined from the gravitational force) may be validated with regard to their calibration by means of a navigation unit of a vehicle. The navigation unit signals whenever the vehicle reaches a place, e.g. a parking space, that it has been visiting before. The sensor data of the gyroscope and of the slope sensor are then compared with historic sensor data that have been measured before when the vehicle has been parked in that place before. If a difference is determined, this is interpreted as a loss of validity of the calibration data. This method only applies for gyroscopic and slope sensors, but not for sensors for surveilling the surroundings of a vehicle, as the surroundings might change.

For validating the calibration data of such a sensor unit, normally a dedicated set-up, e.g. in a workshop, is needed, where the vehicle can be placed in a known relative position with regard to at least one marker element. However, driving the vehicle to such a calibration station is time consuming. Additionally, the calibration station needs space which cannot be used otherwise.

Document US 2011/285856 A1 describes a parking place with a calibration area where a group of ground marks is placed such that a car that is parked on the parking place may use the ground marks for calibrating a camera.

In document EP 2 727 759 A1 an inductive charging station is described which requires for its operation that a car is positioned at a specific target position for the charging process. For guiding a car to that specific target position, a sensor system is used that needs to be calibrated by a calibration procedure that comprises positioning the car in the target position by the help of a human driver and measuring a specific physical quantity by means of a sensor, wherein the measurement results in a reference value for the sensor signal. The next time the car is approaching the target position, the sensor signal can be compared to that reference value and when the current sensor signal corresponds to the reference value, it is known that the car has reached the target position.

In document US 2017/322560 A1 a vehicle is described that may provide visual guidance for a driver when the vehicle is to be driven into a car wash building. A control unit of the car determines the current spatial alignment of a video camera.

Document US 2005/ 229808 A1 discloses an automatic car wash system that is provided for processing multiple vehicles simultaneously. The system includes a radio transmitter that is operable to direct specific information to each of the vehicles via radio signals.

It is an object of the present invention to provide means for validating the calibration of at least one sensor unit.

The object is solved by the subject matter of the independent claims. Advantageous embodiments are described by the dependent claims, the following description and the figures.

The invention provides a method for validating the calibration data of at least one sensor unit of a vehicle. The method is performed while the vehicle is positioned inside or on a pre-defined vehicle servicing device. Such a vehicle servicing device can be, e.g. a car washing device. Such a vehicle servicing device comprises a functional apparatus for performing a defined service to or on the vehicle. In the case of a car washing device, the functional apparatus can be the washing apparatus and the service is the washing of the vehicle. The inventive method relies on the fact that inside or on such a vehicle servicing device, the vehicle is positioned in a pre-defined servicing positon with regard to the functional apparatus. Such a servicing position is normally needed in order to prevent damage to the vehicle when the functional apparatus is active, i.e. servicing the vehicle.

This fact is used by the invention in that in the vehicle servicing device at least one marker element is provided, wherein the at least one marker element is arranged in a pre-defined relative position with regard to the servicing position and/or the functional apparatus. In other words, the at least one marker element is arranged in a pre-defined relative position with regard to the parking space provided for the vehicle in the servicing device. As each marker element has a pre-defined relative positon with regard to the servicing position, the relative position of the at least one marker element with regard to the vehicle is also determined or fixed or known, when the vehicle is arranged in the servicing position. According to the method, before and/or while and/or after the functional apparatus performs its service to the vehicle and while the vehicle is in the servicing positon, at least one control unit of the vehicle operates the at least one sensor unit and thereby detects the at least one marker element and determines positon data describing a relative positon of the at least one marker element with regard to the vehicle. In other words, the vehicle not only received the service, but it is also operated like it was on the already described calibration station. However, as the at least one marker element is integrated in the vehicle servicing device, no extra space is needed.

For the validation of the calibration data, the electronic control unit determines a difference between the position data and pre-defined reference position data. The reference position data result from the knowledge about the relative position of the at least one marker element with regard to the servicing position, i.e. they indicate the true relative position of the at least one marker element with regard to the servicing position. If the difference is larger than a pre-defined threshold, the electronic control unit generates a calibration signal. This calibration signal indicates that the electronic control unit is not able to determine the correct position data with the at least one sensor unit. This indicates that the at least one sensor unit is not operating correctly. For example, the spatial orientation of the sensor unit may have changed and/or the sensor unit may be covered by at least one obstructing object, like e.g. dirt.

The invention provides the advantage that no extra time is needed for validating the calibration data of the at least one sensor unit. The validation of the calibration data may be performed while the vehicle is positioned inside or on the vehicle servicing device for receiving the service provided by the functional apparatus of the servicing device. Additionally, no extra space for a dedicated calibration station is needed, as the at least one marker element is placed or integrated in the vehicle servicing device. Preferably, more than one marker element is provided. The spatial orientation of the at least one sensor unit may then be determined on the basis of a triangulation and/or trilateration concerning the marker elements and the respective sensor unit.

The invention also provides embodiments that provide additional advantages.

In one embodiment, when the calibration signal is generated, a pre-defined re-calibration routine for re-calibrating the at least one sensor unit is started. In other words, new calibration data or adapted calibration data is generated on the basis of a measurement that can be performed on the basis of the at least one marker element of the vehicle servicing device. This provides the advantage that the vehicle does not have to be brought to a workshop for the recalibration. Additionally or alternatively, a warning indication may be provided to a user of the vehicle, when the calibration signal (e.g. a warning message) is generated. In other words, the user may adapt or prepare for a possible change of behavior of the vehicle due to the false calibration of the at least one sensor unit. Additionally or alternatively, a pre-defined vehicle control function is deactivated, when the calibration signal is generated. In other words, a control function that relies on the at least one sensor unit is blocked or deactivated. This provides the advantage that the control function may not generate false control signals due to the incorrect calibration of the at least one sensor unit. Such a vehicle control function can be e.g. an auto pilot for automatically conducting the vehicle.

For performing the inventive method, a vehicle servicing device is needed that has the at least one marker element integrated. Accordingly, the servicing system provides a vehicle servicing device for servicing a vehicle, wherein the servicing device comprises a functional apparatus for performing a predefined service to the vehicle. This service requires that the vehicle is positioned in a pre-defined relative servicing position with regard to the functional apparatus. In other words, when the vehicle is parked or placed or arranged inside the vehicle servicing device correctly, it will be placed in the servicing position. In other words, it is known where the vehicle is placed. In the servicing device at least one marker element is provided, wherein the at least one marker element is arranged in a pre-defined relative position with regard to the servicing position and/or functional apparatus, as has already been described. The at least one marker element is designed to be detectable by at least one optical and/or electromagnetic and/or ultrasonic sensor unit of the vehicle. To this end, the at least one marker element has the corresponding physical properties and shape. The vehicle servicing device therefore not only provides the functional apparatus for performing the service to the vehicle, but also provides an arrangement of at least one marker element that is positioned in a known relative position with regard to the servicing position in which a vehicle will be placed when it is using the vehicle servicing device. The vehicle can therefore both receive the service and perform the described verification or test of its calibration data for the at least one sensor of the vehicle.

In one embodiment, the functional apparatus is a car washing apparatus for washing the vehicle. In one embodiment, the functional apparatus is a lifting platform for lifting the vehicle. Such a lifting platform may be part of a workshop where the vehicle might be lifted for enabling service personnel to do repairs underneath the vehicle. In this case, the functional apparatus is the lift. In one embodiment, the functional apparatus is a multiplex garage for stacking the vehicle above or below another vehicle. In such a multiplex garage, the vehicle is placed in a fixed servicing position on a rack or platform or elevator. In this case, the functional apparatus is the rack or platform or elevator. In one embodiment, the functional apparatus is an inductive recharging station for recharging an electrical energy storage of the vehicle. Such a inductive recharging station also requires that the vehicle is positioned in a specific servicing position in order to minimize the loss during the inductive transferal of energy. In this case, the functional apparatus is the inductive charger (so called primary coil). The embodiments provide the advantage that a vehicle may receive to services at a time, i.e. the service of the functional apparatus and the validation of the calibration data.

In one embodiment, the servicing position is marked and/or enforced in the vehicle servicing device by means of at least one stopping element that blocks a movement of the vehicle while the vehicle is in the servicing positon. In other words, once the vehicle reaches the servicing position, moving the vehicle out of the servicing position requires overcoming the at least one stopping element. Such a stopping element can be, e.g. a bump that has to be overrun by a wheel of the vehicle or a stopping element can be a pit in which the wheel is placed when the vehicle is in the servicing position. The at least one stopping element therefore reduces the possibility of incorrectly positioning the vehicle in the vehicle servicing device.

In one embodiment, a detecting unit of the vehicle servicing device is designed to detect that the vehicle is in the servicing position. In other words, the detecting unit signals when the vehicle has reached the servicing position. Such a detecting unit can be realized, e.g. on the basis of a photo-electric guard or on the basis of a camera combined with an image processing unit. A communication unit of the vehicle servicing device is designed to send out a calibration trigger signal to the vehicle when the detecting unit detects and signals that the vehicle is in the servicing position. In other words, the vehicle is informed when it has reached the servicing position. The communication unit may communicate with the vehicle on the basis of a WLAN-connection (WLAN - wireless local area network) or a Bluetooth-connection or a NFC-connection (NFC - near field communication). The calibration trigger signal may trigger the described verification of the calibration data of the at least one sensor unit of the vehicle. The calibration trigger signal may thus trigger the verification of the calibration data in the described electronic control unit of the vehicle. This allows to perform the verification of the calibration data automatically.

In one embodiment, the vehicle servicing device comprises a signaling unit that is designed for signaling marker data to the vehicle. These marker data describe a type of the at least one marker element and/or the respective position of the at least one marker element. The type of the at least one marker element may concern the appearance of the marker element such that it may be recognized in the sensor data of the at least one sensor unit. For example, an optical appearance or an appearance in the radar-spectrum may be described and/or a shape of the respective marker element may be described. By describing the position of the at least one marker element, the described reference position data are signaled to the vehicle or the reference position data can be derived in the vehicle on the basis of the marker data. This provides the advantage that in the vehicle no pre-knowledge is required for performing the validation of the calibration data in the servicing device.

According to one embodiment, the at least one marker element is unrelated to a servicing function of the functional apparatus. In other words, the at least one marker element is not part of the functional apparatus or does not support the functional apparatus in performing the servicing function. The at least one marker element is an add-on that is additionally installed in the vehicle servicing device. This provides the advantage that the at least one marker element does not have to be adapted to the servicing function.

According to one embodiment, the at least one marker element is permanently installed in the vehicle servicing device. As an advantage, there is no time lost when the vehicle is using the vehicle servicing device. The at least one marker element is permanently available. Is may also be used by several vehicles in a row.

According to one embodiment, at least one of the at least one marker element comprises a surface with a graphical pattern that is arranged in a line of sight of the servicing position. In other words, the surface can be seen by the vehicle when the vehicle is placed in the servicing position. The graphical pattern can be, e.g. a checker pattern. With such a surface a sensor unit comprising a camera can be calibrated.

According to one embodiment, at least one of the at least one marker element provides at least one region that is reflective or absorbent with regard to radar radiation. In other words, a sensor unit comprising a radar can be calibrated on the basis of this at least one marker element. If such a marker element is reflective with regard to radar radiation, the reflection is contained in the sensor data of the sensor unit. If the marker element is absorbent, the sensor data comprise a shadow or the absence of radar echo radiation in the area of the marker element.

According to one embodiment, at least one of the at least one marker element provides at least one region that is reflective or absorbent with regard to ultrasonic waves. With such a marker element a ultrasonic sensor, e.g. a parking assistant sensor, can be tested or calibrated. Like in the case of the radar sensor unit, reflective and absorbent properties result in an echo (reflective marker) or a shadow or absence of echo data (absorbent marker) in the sensor data.

Reflective and absorbent properties can also be mixed or changed in different regions of a marker element or between several marker elements such that there is a pattern of at least one reflective region and at least one absorbent region, which provides the advantage that the spatial position of the at least one marker element can be determined by reflections and shadows or absence of echoes in the sensor data.

The invention also comprises the combination of the features of the embodiments described.

In the following, an exemplary implementation of the invention is described. The figures show:
- Fig. 1: a schematic illustration of an embodiment of the inventive system and
- Fig. 2: a flow diagram illustrating an embodiment of the inventive method.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs mark identical elements or elements that provide the same function.

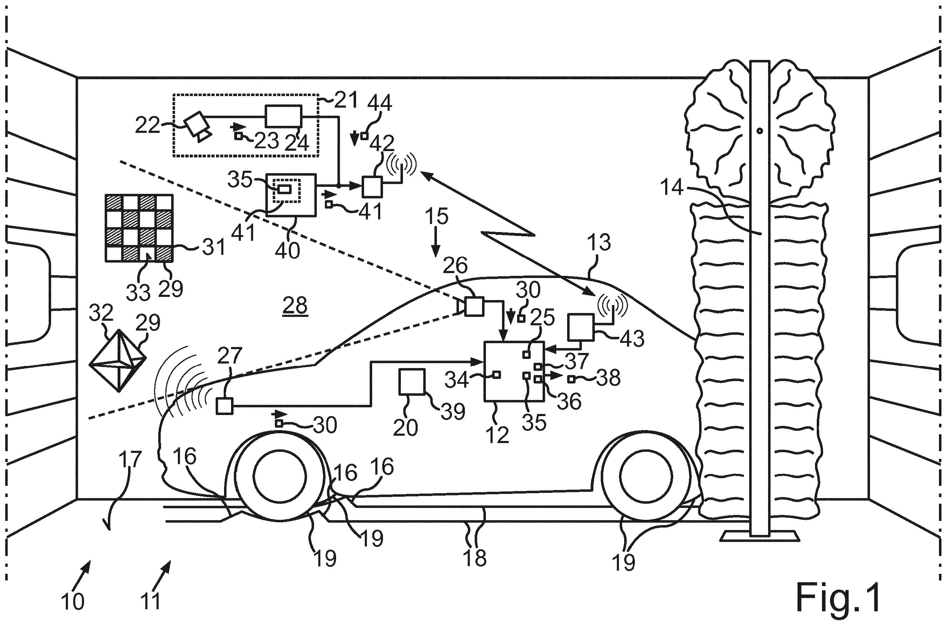

Fig. 1 shows a system 10 that comprises a vehicle servicing device 11 and an electronic control unit 12 that is arranged inside a vehicle 13. The vehicle 13 can be a motor vehicle, especially a passenger vehicle or a truck. In the example shown, the vehicle 13 can be placed inside the vehicle servicing device 11. The vehicle servicing device 11 comprises a functional apparatus 14 for performing a service to the vehicle 13. For example, the functional apparatus 14 can be a car washing apparatus, such that the servicing device 11 is a car washing device. With the function apparatus 14 the service of automatically washing or cleaning the vehicle 13 may be performed.

For enabling the functional apparatus 14 to perform the service, vehicle 13 must be positioned in a pre-defined servicing position 15 with regard to the servicing device 11 and in particular regard to the functional apparatus 14. To this end, at least one stopping element 16 may be provided. For example, on a floor 17 of the servicing device 11, a metal grid 18 may be positioned on which wheels 19 of the vehicle 13 may roll into and out of the servicing device 11. Such a grid 18 may provide steps or bumps as stopping elements 16 which may lead or align or hold the vehicle 13 in the servicing position 15. A driver of the vehicle 13 or an autopilot 20 of vehicle 13 knows when the servicing position 15 is reached when the wheels 19 reach the at least one stopping element 16. The at least stopping element 16 may also be provided independently of a grid 18.

When the vehicle 13 is in the servicing position 15, the functional apparatus 14 may be enabled to perform the service to the vehicle 13 without damaging the vehicle 13.

A detecting unit 21 may be provided in the device 11. The detecting unit 21 may be designed to detect when vehicle 13 has reached the servicing position. To this end, the detecting unit 21 may comprise a camera 22 for optically observing vehicle 13. Camera image data 23 provided by the camera 22 may be processed by an image processing unit 24 of the detecting unit 21. Detecting unit 21 may be designed to trigger the functional apparatus 14 such that the functional apparatus 14 is activated when vehicle 13 has reached the servicing position. Additionally or alternatively to a camera 22 the detecting unit 21 may also comprise a photo-electric guard.

In the system 10, the servicing device 11 is not only used for performing the described service to vehicle 13. Additionally, the servicing device 11 also provides a possibility for the electronic control unit 12 to validate calibration data 25. These calibration data 25 may be used by the electronic control unit 12 to calibrate at least one sensor unit 26, 27 of vehicle 13. Each sensor unit is used by the electronic control unit 12 to surveille or observe the surroundings 28 of vehicle 13. By means of the at least one sensor unit 26, 27, the electronic control unit 12 determines the relative position of at least one object 29 in the surroundings 28. The relative position is determined with regard or in relation to the vehicle 13.

When a sensor unit 26, 27 provides its sensor data 30, the relative position has to be determined by the electronic control unit 12 on the basis of the sensor data 30. This detection process is known in the prior art. The calibration data 25 may be used to calibrate the detection process. They depend on the position and spatial orientation of the respective sensor unit 26, 27 in the vehicle 13. If a sensor unit 26, 27 is moved or displaced in the vehicle 13, the calibration data 25 are not valid anymore.

This is determined by the electronic control unit 12 in the servicing device 11. To this end, the servicing device 11 comprises at least one marker element 31, 32 which each represents an object 29 that can be detected by the electronic control unit 12 by means of the at least one sensor unit 26,27. For example, sensor unit 26 can be a camera. For this camera, a marker element 31 may comprise a surface 33 with a graphical pattern, e.g. a checker pattern or another predefined pattern known to the electronic control unit 12. For example, sensor unit 27 can be radar unit or an ultrasonic sensor. A corresponding marker element 32 can be a reflective object with regard to radar radiation or ultrasonic waves, respectively. Preferably, more than one marker element is provided for each sensor unit 26 or sensor type.

The electronic control unit operates the at least one sensor unit 26, 27 when it is positioned in the servicing position 15. It then determines position data 34 of the at least one marker element 31, 32 on the basis of the sensor data 30 and the calibration data 25. Electronic control unit 12 then uses reference positon data 35 that indicate the true relative position of the at least one marker element 31, 32 with regard to the servicing position 15. If a difference 36 between the position data 34 and the reference positon data 35 is larger or greater than a predefined threshold value 37, the electronic control unit 12 generates a calibration signal 38 which signals that the calibration data 25 are not valid anymore. For example, the calibration signal 38 may deactivate a vehicle control function 39, which can be, e.g. the autopilot 20. The calibration signal may be used to output a warning to a user of the vehicle 13. The calibration signal 38 may also be used to trigger a re-calibration or the generation of new calibration data 25 on the basis of the sensor data 30.

The reference position data 35 can be stored in the electronic control unit 12 before the vehicle 13 is positioned in the servicing device 11. As an alternative, the relative position data 35 may be stored in a signaling unit 40 of the servicing device 11. The reference position data 35 can be part of marker data 41 which may also describe the type of marker elements 31, 32 installed in the servicing device 11. The marker data 41 may be transmitted to the vehicle 13 by means of a communication unit 42 which may be based, e.g. on WLAN-communication or Bluetooth-communication or NFC. Vehicle 13 may comprise a corresponding communication unit 43.

The validation of the calibration data 25 may be started by the electronic control unit 12 in reaction to a calibration trigger signal 44 which may be generated by the detecting unit 21 when the detecting unit 21 detects that the vehicle 13 is in the servicing position 15. Thus, the validation may be triggered automatically.

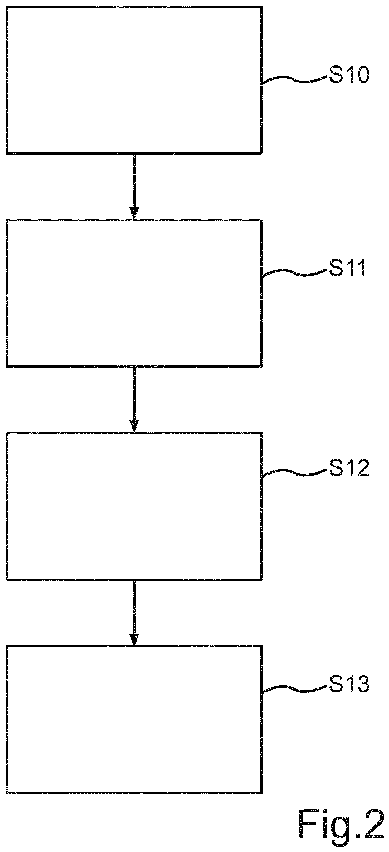

Fig. 2 illustrates the method that is performed in order to validate the calibration data 25.

The method is performed while the vehicle 13 is positioned inside or on the vehicle servicing device 11 in the predefined relative servicing position 15 with regard to the functional apparatus 14 of the vehicle servicing device 11. The functional apparatus 14 performs the service to the vehicle, for example the functional apparatus washes or cleans the vehicle and/or lifts the vehicle for repair works at the vehicle and/or for parking the vehicle and/or the functional apparatus charges the vehicle by means of inductive charging. In a step S10 before and/or while and/or after the functional apparatus performs its service and while the vehicle is in the servicing position 15, at least one control unit 12 of the vehicle 13 operates the at least one sensor unit 26, 27 and thereby detects the at least one marker element 31, 32 of the servicing device 11. In a step S11, the control unit 12 determines position data 34 for the at least one marker element 31, 32 and determines a difference 36 between the position data 34 and predefined reference positon data 35. In a step S11, the control unit 12 determines, if the difference 36 is larger than a pre-determined threshold value 37. The absolute value of the difference may be used in this step. In a step S13, if the difference 36 is larger than the predefined threshold value 37, the control unit 12 generates the calibration signal 38. Otherwise, when the difference is smaller than the threshold value 37, the calibration signal 38 is not generated or generated with a different signal value. The calibration signal 38 triggers a warning or a re-calibration and/or it deactivates a pre-defined vehicle control function 39.

Overall, the example shows how by the invention a car washing device may be provided that offers the additional possibility for automatically calibrating at least one sensor unit of a vehicle.

## Claims

1. Method for validating calibration data (25) of at least one sensor unit (26, 27) of a vehicle (13), while the vehicle (13) is positioned inside or on a predefined vehicle servicing device (11) in a predefined relative servicing position (15) with regard to a functional apparatus (14) of the vehicle servicing device (11), wherein the functional apparatus (14) is a car washing apparatus for washing the vehicle (13) or a lifting platform for lifting the vehicle (13) or a multiplex garage for stacking the vehicle above or below another vehicle or an inductive recharging station for recharging an electrical energy storage of the vehicle (13) and wherein the functional apparatus (14) performs a predefined service to the vehicle (13), and wherein
in the vehicle servicing device (11) at least one marker element (31, 32) is provided, wherein the at least one marker element (31, 32) is arranged in a predefined relative position with regard to the predefined relative servicing position (15) and wherein the at least one marker element (31, 32) is designed to be detectable by the at least one sensor unit (26, 27), wherein the at least one sensor unit (26, 27) is an optical and/or electromagnetic and/or ultrasonic sensor unit, and
before and/or while and/or after the functional apparatus (14) performs its service and while the vehicle (13) is in the predefined relative servicing position (15) at least one control unit (12) of the vehicle (13) operates the at least one sensor unit (26, 27) and thereby detects the at least one marker element (31, 32) and determines position data (34) describing a relative position of the at least one marker element (31, 32) with regard to the vehicle (13) and determines a difference (36) between the position data (34) and predefined reference position data (35) that indicate the true relative position of the at least one marker element (31, 32) with regard to the servicing position (15) and, if the difference (36) is larger than a predefined threshold value (37), generates a calibration signal (38).

2. Method according to claim 1, wherein when the calibration signal (38) is generated, a predefined recalibration routine for recalibrating the at least one sensor unit (26, 27) is started and/or a warning indication is provided to a user of the vehicle (13) and/or a predefined vehicle control function (39) is deactivated.

3. System comprising
• a vehicle (13) with at least one sensor unit (26, 27), wherein the at least one sensor unit (26, 27) is an optical and/or electromagnetic and/or ultrasonic sensor unit, and
• a servicing system (10) comprising a vehicle servicing device (11) for providing a service to the vehicle (13), the servicing system (10) comprising at least one control unit (12) for the vehicle (13),
wherein the system is designed to perform a method according to claim 1 or 2 wherein the servicing device (11) comprises a functional apparatus (14) for performing the predefined service to the vehicle (13), wherein the functional apparatus (14) is a car washing apparatus for washing the vehicle (13) or a lifting platform for lifting the vehicle (13) or a multiplex garage for stacking the vehicle above or below another vehicle or an inductive recharging station for recharging an electrical energy storage of the vehicle (13) and wherein the service requires that the vehicle (13) is positioned in a predefined relative servicing position (15) with regard to the functional apparatus (14), wherein
in the servicing device (11) at least one marker element (31, 32) is provided, wherein the at least one marker element (31, 32) is arranged in a predefined relative position with regard to the predefined relative servicing position (15), wherein the at least one marker element (31, 32) is designed to be detectable by at least one optical and/or electromagnetic and/or ultrasonic sensor unit (26, 27) of the vehicle (13).

4. System according to claim 3, wherein the predefined relative servicing position (15) is marked and/or enforced in the vehicle servicing device (11) by means of at least one stopping element (16) that blocks a movement of the vehicle (13) while the vehicle (13) is in the predefined relative servicing position (15).

5. System according to any one of claims 3 or 4, wherein the vehicle servicing device (11) comprises a signaling unit (40) that is designed for signaling marker data (41) to the vehicle (13), wherein the marker data (41) describe a type of the at least one marker element (31, 32) and/or contain the predefined reference position data (35) of the at least one marker element (31, 32).

6. System according to any one of claims 3 to 5, wherein the at least one marker element (31, 32) is unrelated to a servicing function of the functional apparatus (14).

7. System according to any one of claims 3 to 6, wherein the at least one marker element (31, 32) is permanently installed in the vehicle servicing device (11).

8. System according to any one of claims 3 to 7, wherein the at least one marker element (31, 32) comprises a surface (33) with a graphical pattern that is arranged in a line of sight of the predefined relative servicing position (15).

9. System according to any one of claims 3 to 8, wherein the at least one marker element (31, 32) provides at least one region that is reflective and/or absorbent with regard to radar radiation.

10. System according to any one of claims 3 to 9, wherein the at least one marker element (31, 32) provides at least one region that is reflective or absorbent with regard to ultrasonic waves.

11. System according to any one of claims 3 to 10, wherein a detecting unit (21) of the servicing system (10) is provided in the vehicle servicing device (11), wherein the detecting unit (21) is designed to detect that the vehicle (13) is in the predefined relative servicing position (15) and a communication unit (42) of the vehicle servicing device (11) is designed to send out a calibration trigger signal (44) to the vehicle (13) when the vehicle (13) is detected to be in the predefined relative servicing position (15).

## Patentansprüche

1. Verfahren zum Validieren von Kalibrierungsdaten (25) mindestens einer Sensoreinheit (26, 27) eines Fahrzeugs (13), während das Fahrzeug (13) in oder an einer vordefinierten Fahrzeugdienstvorrichtung (11) in einer vordefinierten relativen Dienstposition (15) im Hinblick auf ein Funktionsgerät (14) der Fahrzeugdienstvorrichtung (11) positioniert ist, wobei das Funktionsgerät (14) ein Autowaschgerät zum Waschen des Fahrzeugs (13) oder eine Hubplattform zum Anheben des Fahrzeugs (13) oder eine Multiplexgarage zum Stapeln des Fahrzeugs über oder unter einem anderen Fahrzeug oder eine induktive Wiederaufladestation zum Wiederaufladen eines elektrischen Energiespeichers des Fahrzeugs (13) ist, und wobei das Funktionsgerät (14) einen vordefinierten Dienst am Fahrzeug (13) durchführt, und wobei
in der Fahrzeugdienstvorrichtung (11) mindestens ein Markierungselement (31, 32) vorgesehen ist, wobei das mindestens eine Markierungselement (31, 32) in einer vordefinierten relativen Position im Hinblick auf die vordefinierte relative Dienstposition (15) angeordnet ist, und wobei das mindestens eine Markierungselement (31, 32) so ausgelegt ist, dass es durch die mindestens eine Sensoreinheit (26, 27) detektierbar ist, wobei die mindestens eine Sensoreinheit (26, 27) eine optische und/oder elektromagnetische und/oder Ultraschallsensoreinheit ist, und
bevor und/oder während und/oder nachdem das Funktionsgerät (14) seinen Dienst durchführt und während sich das Fahrzeug (13) in der vordefinierten relativen Dienstposition (15) befindet, mindestens ein Steuergerät (12) des Fahrzeugs (13) die mindestens eine Sensoreinheit (26, 27) betreibt und dadurch das mindestens eine Markierungselement (31, 32) detektiert und Positionsdaten (34) bestimmt, die eine relative Position des mindestens einen Markierungselements (31, 32) im Hinblick auf das Fahrzeug (13) beschreiben, und eine Differenz (36) zwischen den Positionsdaten (34) und vordefinierten Referenzpositionsdaten (35), die die wahre relative Position des mindestens einen Markierungselements (31, 32) im Hinblick auf die Dienstposition (15) angeben, bestimmt, und falls die Differenz (36) größer ist als ein vordefinierter Schwellenwert (37), ein Kalibrierungssignal (38) erzeugt.

2. Verfahren nach Anspruch 1, wobei, wenn das Kalibrierungssignal (38) erzeugt wird, eine vordefinierte Neukalibrierungsroutine zum Neukalibrieren der mindestens einen Sensoreinheit (26, 27) gestartet wird und/oder ein Warnhinweis zu einem Benutzer des Fahrzeugs (13) geliefert wird und/oder eine vordefinierte Fahrzeugsteuerfunktion (39) deaktiviert wird.

3. System, das umfasst
• ein Fahrzeug (13) mit mindestens einer Sensoreinheit (26, 27), wobei die mindestens eine Sensoreinheit (26, 27) eine optische und/oder elektromagnetische und/oder Ultraschallsensoreinheit ist, und
• ein Dienstsystem (10) mit einer Fahrzeugdienstvorrichtung (11) zum Bereitstellen eines Diensts für das Fahrzeug (13), wobei das Dienstsystem (10) mindestens ein Steuergerät (12) für das Fahrzeug (13) umfasst,
wobei das System dazu ausgelegt ist, ein Verfahren nach Anspruch 1 oder 2 durchzuführen, wobei die Dienstvorrichtung (11) ein Funktionsgerät (14) zum Durchführen des vordefinierten Diensts am Fahrzeug (13) umfasst, wobei das Funktionsgerät (14) ein Autowaschgerät zum Waschen des Fahrzeugs (13) oder eine Hubplattform zum Anheben des Fahrzeugs (13) oder eine Multiplexgarage zum Stapeln des Fahrzeugs über oder unter einem anderen Fahrzeug oder eine induktive Wiederaufladestation zum Wiederaufladen eines elektrischen Energiespeichers des Fahrzeug (13) ist, und wobei der Dienst erfordert, dass das Fahrzeug (13) in einer vordefinierten relativen Dienstposition (15) im Hinblick auf das Funktionsgerät (14) positioniert wird, wobei
in der Dienstvorrichtung (11) mindestens ein Markierungselement (31, 32) vorgesehen ist, wobei das mindestens eine Markierungselement (31, 32) in einer vordefinierten relativen Position im Hinblick auf die vordefinierte relative Dienstposition (15) angeordnet ist, wobei das mindestens eine Markierungselement (31, 32) so ausgelegt ist, dass es durch mindestens eine optische und/oder elektromagnetische und/oder Ultraschallsensoreinheit (26, 27) des Fahrzeugs (13) detektierbar ist.

4. System nach Anspruch 3, wobei die vordefinierte relative Dienstposition (15) in der Fahrzeugdienstvorrichtung (11) mittels mindestens eines Stoppelements (16), das eine Bewegung des Fahrzeugs (13) blockiert, während sich das Fahrzeug (13) in der vordefinierten relativen Dienstposition (15) befindet, markiert und/oder verstärkt wird.

5. System nach einem der Ansprüche 3 oder 4, wobei die Fahrzeugdienstvorrichtung (11) eine Signalisierungseinheit (40) umfasst, die zum Signalisieren von Markierungsdaten (41) an das Fahrzeug (13) ausgelegt ist, wobei die Markierungsdaten (41) einen Typ des mindestens einen Markierungselements (31, 32) beschreiben und/oder die vordefinierten Referenzpositionsdaten (35) des mindestens einen Markierungselements (31, 32) enthalten.

6. System nach einem der Ansprüche 3 bis 5, wobei das mindestens eine Markierungselement (31, 32) nicht mit einer Dienstfunktion des Funktionsgeräts (14) in Beziehung steht.

7. System nach einem der Ansprüche 3 bis 6, wobei das mindestens eine Markierungselement (31, 32) dauerhaft in der Fahrzeugdienstvorrichtung (11) installiert ist.

8. System nach einem der Ansprüche 3 bis 7, wobei das mindestens eine Markierungselement (31, 32) eine Oberfläche (33) mit einem graphischen Muster umfasst, das in einer Sichtlinie der vordefinierten relativen Dienstposition (15) angeordnet ist.

9. System nach einem der Ansprüche 3 bis 8, wobei das mindestens eine Markierungselement (31, 32) mindestens einen Bereich bereitstellt, der im Hinblick auf Radarstrahlung reflektierend und/oder absorbierend ist.

10. System nach einem der Ansprüche 3 bis 9, wobei das mindestens eine Markierungselement (31, 32) mindestens einen Bereich bereitstellt, der im Hinblick auf Ultraschallwellen reflektierend oder absorbierend ist.

11. System nach einem der Ansprüche 3 bis 10, wobei eine Detektionseinheit (21) des Dienstsystems (10) in der Fahrzeugdienstvorrichtung (11) vorgesehen ist, wobei die Detektionseinheit (21) dazu ausgelegt ist zu detektieren, dass sich das Fahrzeug (13) in der vordefinierten relativen Dienstposition (15) befindet, und eine Kommunikationseinheit (42) der Fahrzeugdienstvorrichtung (11) dazu ausgelegt ist, ein Kalibrierungsauslösesignal (44) zum Fahrzeug (13) auszusenden, wenn detektiert wird, dass sich das Fahrzeug (13) in der vordefinierten relativen Dienstposition (15) befindet.

## Revendications

1. Procédé pour valider des données d'étalonnage (25) d'au moins une unité de détection (26, 27) d'un véhicule (13), alors que le véhicule (13) est positionné à l'intérieur ou sur un dispositif d'entretien de véhicule prédéfini (11) dans une position relative d'entretien prédéfinie (15) par rapport à un appareil fonctionnel (14) du dispositif d'entretien de véhicule (11), dans lequel l'appareil fonctionnel (14) est un appareil de lavage de voitures pour laver le véhicule (13) ou une plate-forme de levage pour lever le véhicule (13) ou un garage multiplex pour empiler le véhicule au-dessus ou au-dessous d'un autre véhicule ou une station de recharge inductive pour recharger un stockage de l'énergie électrique du véhicule (13), et dans lequel l'appareil fonctionnel (14) réalise un entretien prédéfini au véhicule (13), et dans lequel
dans le dispositif d'entretien de véhicule (11) au moins un élément de marquage (31, 32) est fourni, dans lequel l'au moins un élément de marquage (31, 32) est agencé dans une position relative prédéfinie par rapport à la position relative d'entretien prédéfinie (15) et dans lequel l'au moins un élément de marquage (31, 32) est conçu pour être détectable par l'au moins une unité de détection (26, 27), dans lequel l'au moins une unité de détection (26, 27) est une unité de détection optique et / ou électromagnétiqe et / ou ultrasonique, et
avant, pendant ou après la réalisation de l'entretien par l'appareil fonctionnel (14) et pendant que le véhicule (13) est dans la position relative d'entretien prédéfinie (15), au moins une unité de commande (12) du véhicule (13) fait fonctionner l'au moins une unité de détection (26, 27) et détecte ainsi l'au moins un élément de marquage (31, 32) et détermine des données de position (34) décrivant une position relative de l'au moins un élément de marquage (31, 32) par rapport au véhicule (13) et détermine une différence (36) entre les données de position (34) et des données de position de référence prédéfinies (35) qui indiquent la vraie position relative de l'au moins un élément de marquage (31, 32) par rapport à la position d'entretien (15), et, si la différence (36) est supérieure à une valeur seuil prédéfinie (37), génère un signal d'étalonnage (38).

2. Procédé selon la revendication 1, dans lequel, lorsque le signal d'étalonnage (38) est généré, une routine prédéfinie de réétalonnage pour réétalonner l'au moins une unité de détection (26, 27) est lancée et / ou une indication d'avertissement est fournie à un utilisateur du véhicule (13) et / ou une fonction de commande de véhicule prédéfinie (39) est désactivée.

3. Système comportant
- un véhicule (13) avec au moins une unité de détection (26, 27), dans lequel l'au moins une unité de détection (26, 27) est une unité de détection optique et / ou électromagnétiqe et / ou ultrasonique, et
- un système d'entretien (10) comportant un dispositif d'entretien de véhicule (11) pour fournir un entretien au véhicule (13), le système d'entretien (10) comportant au moins une unité de commande (12) pour le véhicule (13),
dans lequel le système est conçu pour réaliser un procédé selon la revendication 1 ou 2, dans lequel le dispositif d'entretien (11) comporte un appareil fonctionnel (14) pour réaliser l'entretien prédéfini au véhicule (13), dans lequel l'appareil fonctionnel (14) est un appareil de lavage de voitures pour laver le véhicule (13) ou une plate-forme de levage pour lever le véhicule (13) ou un garage multiplex pour empiler le véhicule au-dessus ou au-dessous d'un autre véhicule ou une station de recharge inductive pour recharger un stockage de l'énergie électrique du véhicule (13), et dans lequel l'entretien exige que le véhicule (13) soit positionné dans une position relative d'entretien prédéfinie (15) par rapport à l'appareil fonctionnel (14), dans lequel
dans le dispositif d'entretien (11) au moins un élément de marquage (31, 32) est fourni, dans lequel l'au moins un élément de marquage (31, 32) est agencé dans une position relative prédéfinie par rapport à la position relative d'entretien prédéfinie (15), dans lequel l'au moins un élément de marquage (31, 32) est conçu pour être détectable par au moins une unité de détection (26, 27) optique et / ou électromagnétiqe et / ou ultrasonique du véhicule (13).

4. Système selon la revendication 3, dans lequel la position relative d'entretien prédéfinie (15) est marquée et / ou forcée dans le dispositif d'entretien de véhicule (11) par l'intermédiaire de l'au moins un élément d'arrêt (16) qui bloque un mouvement du véhicule (13) pendant que le véhicule (13) est dans la position relative d'entretien prédéfinie (15).

5. Système selon l'une quelconque des revendications 3 ou 4, dans lequel le dispositif d'entretien de véhicule (11) comporte une unité de signalisation (40) qui est conçue pour la signalisation des données de marquage (41) au véhicule (13), dans lequel les données de marquage (41) décrivent un type de l'au moins un élément de marquage (31, 32), et / ou comprennent les données de position de référence prédéfinies (35) de l'au moins un élément de marquage (31, 32).

6. Système selon l'une quelconque des revendications 3 à 5, dans lequel l'au moins un élément de marquage (31, 32) est sans rapport avec la fonction d'entretien de l'appareil fonctionnel (14).

7. Système selon l'une quelconque des revendications 3 à 6, dans lequel l'au moins un élément de marquage (31, 32) est installé de façon permanente dans le dispositif d'entretien de véhicule (11).

8. Système selon l'une quelconque des revendications 3 à 7, dans lequel l'au moins un élément de marquage (31, 32) comporte une surface (33) avec un motif graphique qui est agencé dans une ligne de visée de la position relative d'entretien prédéfinie (15).

9. Système selon l'une quelconque des revendications 3 à 8, dans lequel l'au moins un élément de marquage (31, 32) fournit au moins une région qui est réfléchissante et / ou absorbante par rapport au rayonnement radar.

10. Système selon l'une quelconque des revendications 3 à 9, dans lequel l'au moins un élément de marquage (31, 32) fournit au moins une région qui est réfléchissante ou absorbante par rapport aux ondes ultrasoniques.

11. Système selon l'une quelconque des revendications 3 à 10, dans lequel une unité de détection (21) du système d'entretien (10) est fournie dans le dispositif d'entretien de véhicule (11), dans lequel l'unité de détection (21) est conçue pour détecter que le véhicule (13) est dans la position relative d'entretien prédéfinie (15), et une unité de communication (42) du dispositif d'entretien de véhicule (11) est conçue pour envoyer un signal de déclenchement d'étalonnage (44) au véhicule (13), lorsque le véhicule (13) est détecté comme étant dans la position relative d'entretien prédéfinie (15).
